# EUROPÄISCHE PATENTSCHRIFT

(11) **EP 1 693 321 B1**
(45) Veröffentlichungstag und Bekanntmachung des Hinweises auf die Patenterteilung: **10.10.2007**
(21) Anmeldenummer: 06100489.1
(22) Anmeldetag: 18.01.2006
(51) Int. Cl.: B65G 21/20, B31B 1/02, B65H 5/22

(54) **Fördervorrichtung für flache Artikel**
Transport device for flat articles
Dispositif de transport pour articles plats

(30) Priorität: 16.02.2005 DE 102005006915
(43) Veröffentlichungstag der Anmeldung: 23.08.2006
(73) Patentinhaber: Heidelberger Druckmaschinen AG, 69115 Heidelberg (DE)
(72) Erfinder: Diehr, Wolfgang, 41515 Grevenbroich (DE); Commandeur, Markus, 41472 Neuss (DE); Padar, Sedat, 50769 Köln (DE)

(56) Entgegenhaltungen:
- WO-A-02/20382
- DE-C1- 3 607 882
- US-A- 5 373 933
- US-A- 6 164 431

## Beschreibung

Die vorliegende Erfindung betrifft eine Fördervorrichtung für flache Artikel gemäß dem Oberbegriff von Anspruch 1.

Vorrichtungen, die flache Artikel mittels Saugluftunterstützung transportieren, werden in Maschinen der graphischen Industrie vielfach verwendet.

Aus der DE 36 07 882 A1 ist beispielsweise ein Ausrichtetisch bekannt, bei dem Bogen aus Papier, Pappe oder dergleichen gefördert und gleichzeitig ausgerichtet werden. Hierzu werden die Bogen auf einem schräg laufenden Band geführt. In dem Band sind Durchbrechungen ausgebildet, die mit einem darunter angeordneten Saugkasten in Verbindung stehen. Um bogenablaufseitig die Saugluft auf der Bandoberfläche verringern zu können, ist in dem Saugkanal eine Öffnung vorgesehen, die von einer Platte abgedeckt ist und zur Verringerung der Saugwirkung teilweise durch Verschieben der Platte freigegeben werden kann.

Aus der EP 0 881 173 B1 ist ein Rollen- oder Bandförderer zum Transportieren und Drehen von Artikeln niedriger spezifischer Masse bekannt. Die flachen Artikel werden auf zwei nebeneinander angeordneten Reihen von Rollen geführt. Unterhalb der Rollen befindet sich ein Saugkasten. Ein oder mehrere Ventilatoren sind am Boden des Saugkastens angeordnet. Diese Ventilatoren erzeugen einen Unterdruck im Inneren des Saugkastens und erhöhen dadurch den Kontaktdruck zwischen den flachen Artikeln und den Förderrollen.

Die bekannten Vorrichtungen haben den Nachteil, dass bei extrem kleinen zu fördernden Artikeln der größte Teil des erzeugten Luftstroms durch die nicht durch den Artikel abgedeckten Lücken in der Transportvorrichtung entweicht. Im Normalfall ist dies nur durch einen höheren Volumenstrom zu kompensieren, was entsprechend große Ventilatoren erforderlich macht. Dies ist nachteilig für den Wirkungsgrad der Ventilatoren und erzeugt entsprechend der großen benötigten Luftmengen, einen entsprechend hohen Lärmpegel.

Aufgabe der vorliegenden Erfindung ist es, eine Vorrichtung zu schaffen, mit der unter Vermeidung der dargestellten Nachteile, Artikel unterschiedlicher Abmessungen sicher transportiert werden können.

Diese Aufgabe wird gelöst durch eine Vorrichtung gemäß dem kennzeichnenden Teil des Anspruchs 1.

Aufgrund der Tatsache, dass die Kammer, in welcher Unterdruck erzeugt wird, bewegliche Seitenwände hat, kann die Saugwirkung auf einfache Art und Weise unterschiedlichen Formaten der zu transportierenden Artikel angepasst werden. Hierdurch wird gewährleistet, dass zwischen dem zu transportierenden Artikel und den Förderelementen immer die optimale Friktion eingestellt werden kann. Der erzeugte Volumenstrom, der sich zum einen in Transportrichtung der zu transportierenden Artikel und quer dazu erstreckt, kann nun entweder über die gesamte Transportebene eingeleitet werden oder wahlweise nur in einem beliebig schmalen Teilbereich. Damit ist es möglich, bei der Verarbeitung von kleinen zu transportierenden Artikeln, den Unterdruckbereich auf eine kleinere Fläche zu verteilen.

In einer bevorzugten Ausführungsform sind die Seitenwände quer zur Transportrichtung der flachen Artikel verschiebbar. Hierdurch können auf einfache Art und Weise unterschiedliche rechteckige Querschnitte der Saugkammer erzeugt werden.

In einer weiteren vorteilhaften Ausführungsform sind die Seitenwände als Klappen ausgebildet, die jeweils über einen Drehpunkt verstellbar sind. Hierdurch können auf einfache Art und Weise unterschiedliche trapezförmige Querschnitte gebildet werden.

Je nach Format des zu transportierenden flachen Artikels kann es vorteilhaft sein, wenn die Seitenwände unabhängig voneinander (z. B. bei asymmetrischen Formaten) oder aber gleichzeitig (z. B. bei symmetrischen Formaten) verstellbar sind. Hierdurch ergibt sich eine Vielfalt von Einstellmöglichkeiten.

In einer weiteren bevorzugten Ausführungsform wird der Unterdruck in der Kammer durch mindestens einen Ventilator erzeugt. Es ist natürlich auch möglich, andere Saugvorrichtungen, wie beispielsweise Seitenkanalverdichter oder Vakuumpumpen, zu verwenden. Bevorzugt wird jedoch mindestens ein Ventilator verwendet, da Ventilatoren die notwendigen Volumenströme einfach erzeugen können.

In einer besonders bevorzugten Ausführungsform enthält die Fördervorrichtung Mittel zum Ändern der Orientierung der flachen Artikel. Diese bestehen beispielsweise aus mindestens zwei, entlang der Bahn der zu fördernden Artikel angeordneten, Förderelemente, die mit unterschiedlichen Geschwindigkeiten antreibbar sind. Um nun die beabsichtigte Drehung des Artikels während des Transportes zu gewährleisten, ist es besonders vorteilhaft, wenn der Unterdruck nur unter dem zu drehenden flachen Artikel wirksam ist und hier die notwendige Friktion zwischen Artikel und Förderelementen herstellt. Bevorzugt werden Transportrollen mit einer die Reibung erhöhenden Beschichtung eingesetzt.

Bevorzugte Ausführungsformen werden im Folgenden unter Bezugnahme auf die Zeichnungen näher beschrieben. Es zeigen in schematischer Darstellung:
- Fig. 1: Perspektivische Darstellung einer Ausführungsform der erfindungsgemäßen Fördervorrichtung von unten
- Fig. 2: Perspektivische Darstellung einer Ausführungsform der erfindungsgemäßen Fördervorrichtung von oben
- Fig. 3: Schematische Darstellung der Seitenwände der Unterdruckkammer
- Fig. 4 bis 6: Schnittdarstellungen der Fördervorrichtung mit unterschiedlichen Querschnitten der Unterdruckkammer
- Fig. 7a, 7b: Darstellung einer Vorrichtung zur gemeinsamen Verstellung der Seitenwände der Unterdruckkammer

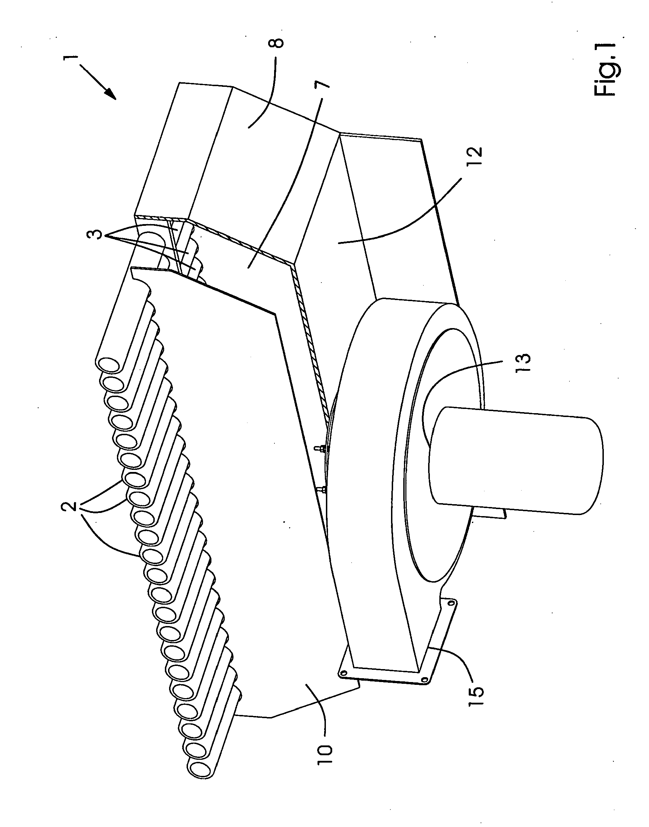

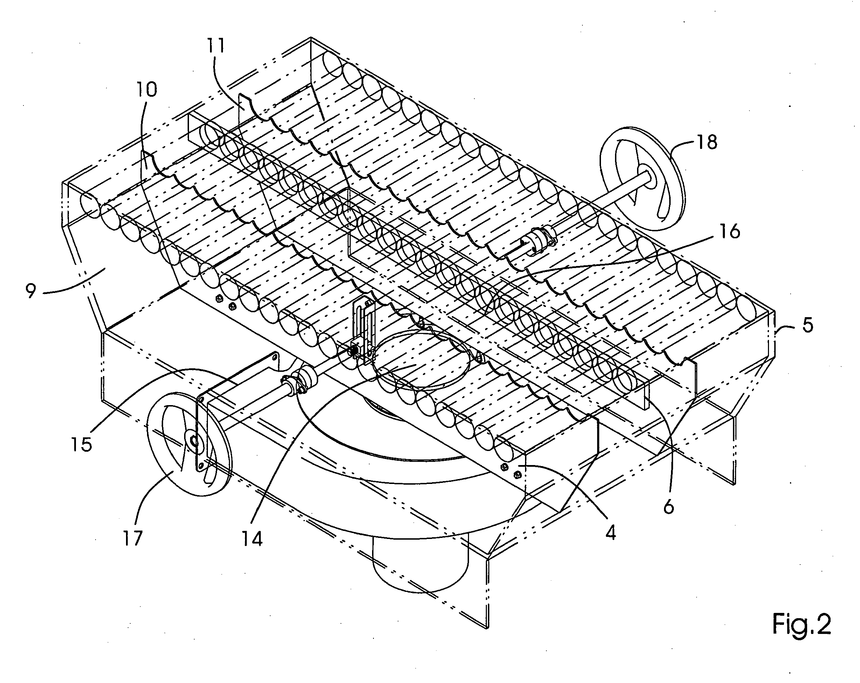

Die Figuren 1 und 2 zeigen eine Fördervorrichtung 1 für flache Artikel mit Förderelementen 2, 3, die in nicht näher dargestellter, bekannter Weise in Außenwänden 4, 5 und einer Mittelhalterung 6 gelagert sind. Unterhalb der Förderelemente 2, 3 ist eine Kammer 7 angeordnet. Die Kammer 7 wird begrenzt durch eine Vorderwand 8, eine Rückwand 9, zwei Seitenwände 10, 11 und eine Bodenplatte 12.

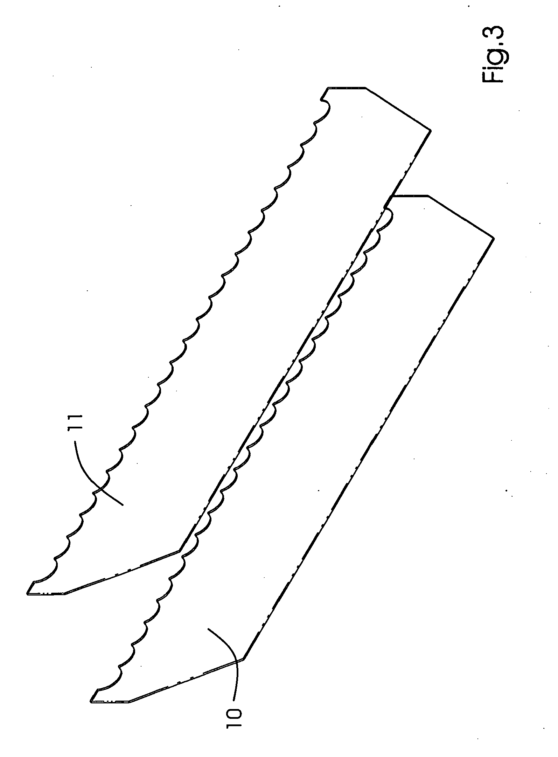

Wie aus Fig. 3 zu ersehen ist, haben die Seitenwände 10, 11 an ihren oberen Kanten eine wellenförmige Struktur, damit sie möglichst nahe an die Förderelemente 2, 3 herangeführt werden können. Unterhalb der Kammer 7 befindet sich eine Saugvorrichtung 13, die über eine Öffnung 14 in der Bodenplatte die Luft aus der Kammer 7 absaugt und über einen Absaugkanal 15 abführt.

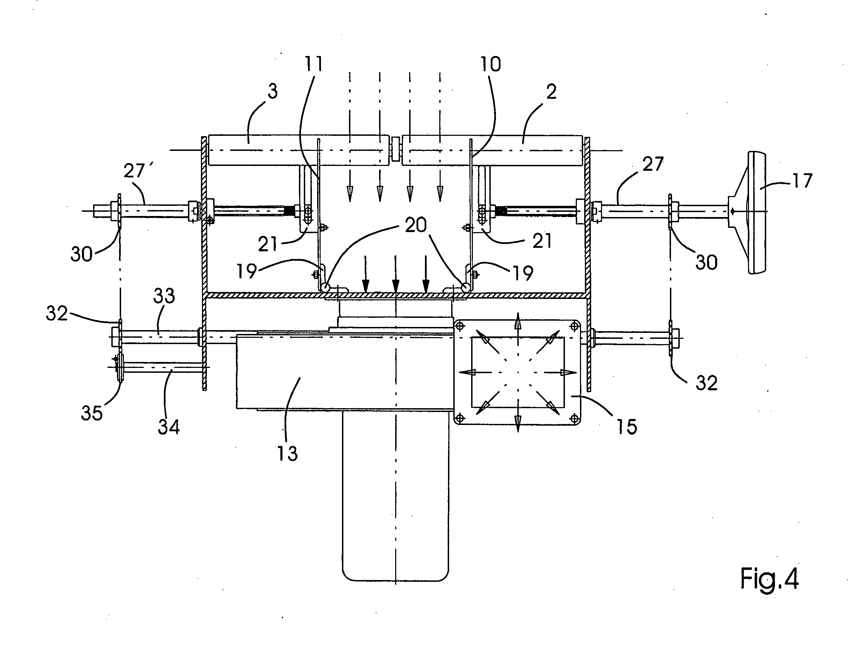

Durch diese Anordnung bildet die Summe der Förderelemente 2, 3 eine für die Luft der Kammer 7 durchlässige obere Fläche 16, so dass bei Betrieb der Saugvorrichtung 13 ein durch die Pfeile in den Figuren 4, 5, und 6 angedeuteter Volumenstrom entsteht, der einen nicht dargestellten, sich auf den Förderelementen befindlichen flachen Artikel ansaugen würde.

Die Seitenwände 10, 11 der Kammer 7 sind beweglich ausgebildet und können mit nicht näher dargestellten Stellmitteln auf der Bodenplatte 12 nach innen oder außen verschoben werden. Die Verstellung kann beispielsweise mittels Handrädern 17, 18 oder nicht dargestellten motorischen Antrieben und Gewindespindeln erfolgen. Die Verstellung kann hierbei für jede Seitenwand 10, 11 getrennt und unabhängig voneinander oder gemeinsam erfolgen.

In den Fig. 4 bis 6 ist eine weitere Variante der verstellbaren Seitenwände 10, 11 dargestellt. Bei dieser Ausführungsform sind die beweglichen Seitenwände 10, 11 als Klappen ausgebildet, die über jeweils einen Drehpunkt 20, beispielsweise ein Scharnier (19) verstellbar sind.

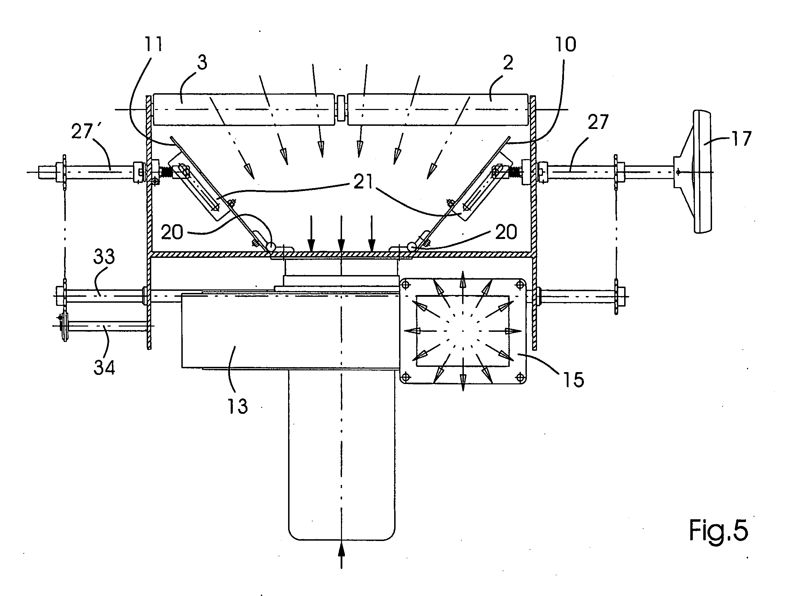

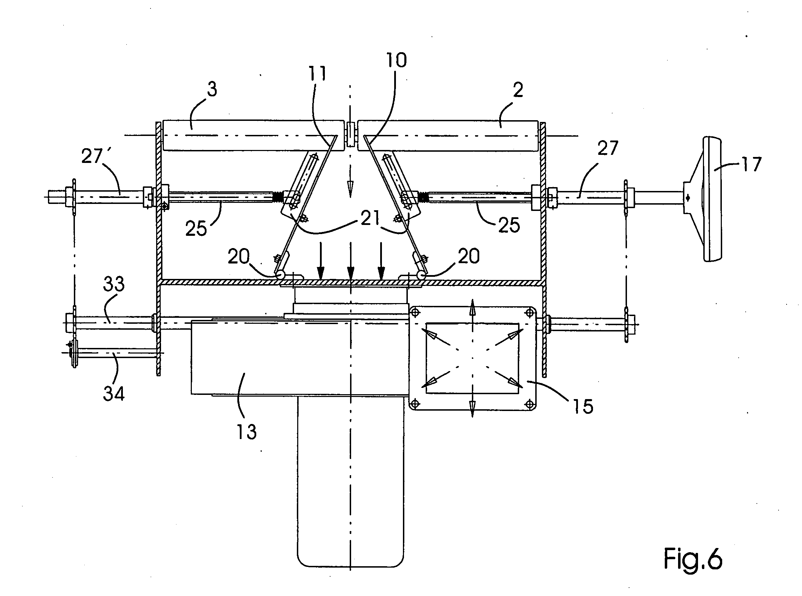

In Fig. 4 bilden die Seitenwände einen rechten Winkel zur Bodenplatte. Der hieraus resultierende Querschnitt der Kammer 7 ist rechtwinklig. Durch eine Verstellung der Seitenwände 10, 11 um jeweils den Drehpunkt 20 kann, wie in Fig. 5 dargestellt, die wirksame Fläche für den Lufteintritt bei Betrieb der Saugvorrichtung 13 vergrößert werden, oder, wie in Fig. 6 dargestellt, verkleinert werden. Hierdurch ist eine Anpassung der Saugwirkung auf unterschiedliche Formate von zu fördernden flachen Artikeln möglich. Die Verstellung der Seitenwände 10, 11 um den jeweiligen Drehpunkt 20 kann einzeln und unabhängig voneinander erfolgen, oder aber, wie in den Fig. 4 bis 8 dargestellt, gemeinsam.

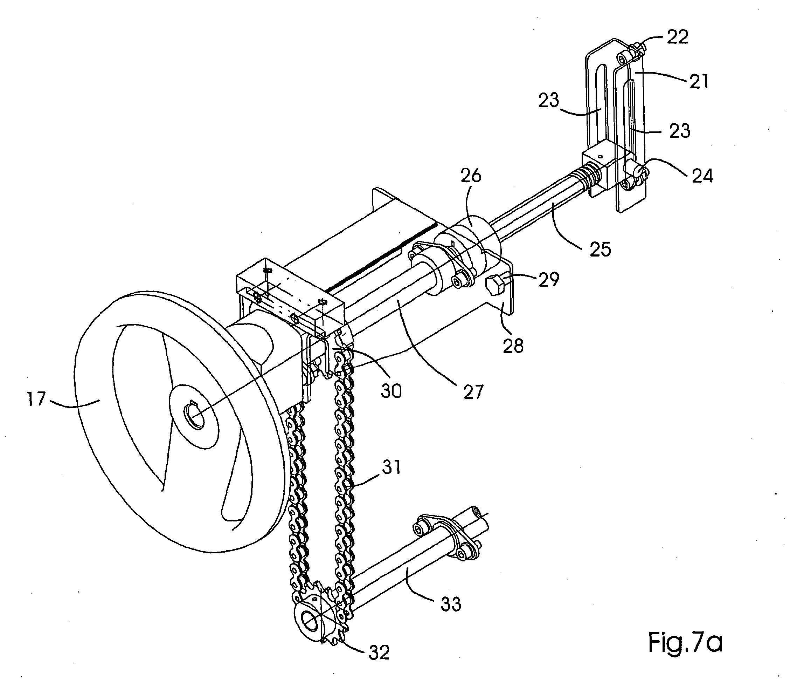

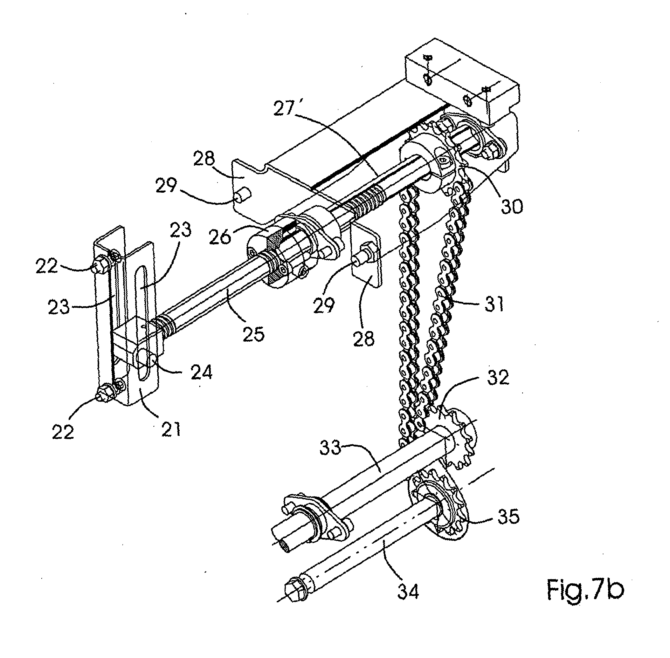

Eine Möglichkeit, die Klappen gemeinsam zu verstellen, ist in den Fig. 7a, 7b näher dargestellt. Hierbei ist beispielsweise die Seitenwand 10 mittels der Befestigungsvorrichtung 21 über eine Schraubverbindung 22 und in Langlöchern 23 der Befestigungsvorrichtung 21 geführten Zapfen 24 mit einer Gewindespindel 25 verbunden. Die Gewindespindel 25 ist an ihrer der Befestigungsvorrichtung 25 abgewandten Seite in einer Mutter 26, die fest auf einer Hohlwelle 27 befestigt ist, geführt. Die Hohlwelle 27 ist an ihrem einen Ende über eine Halterung 28 und eine Befestigungsvorrichtung 29 mit der Seitenwand 4 der Kammer 7 verbunden. An ihrem anderen Ende ist die Hohlwelle mit einem Handrad 17 verbunden.

Die Seitenwand 11 ist in äquivalenter Weise mittels der Befestigungsvorrichtung 21 über eine Schraubverbindung 22 und in Langlöchern 23 der Befestigungsvorrichtung 21 geführten Zapfen 24 mit einer Gewindespindel 25 verbunden. Die Gewindespindel 25 ist an ihrer der Befestigungsvorrichtung 21 abgewandten Seite in einer Mutter 26, die fest auf einer Hohlwelle 27' befestigt ist, geführt. Die Hohlwelle 27' ist an ihrem einen Ende über eine Halterung 28 und Befestigungsvorrichtung 29 mit der Seitenwand 5 der Kammer 7 verbunden.

Auf den Hohlwellen 27, 27' ist jeweils eine Kettenrad 30 befestigt. Unterhalb der Hohlwellen 27, 27' ist eine durch die Kammer 7 verlaufende weitere Welle 33 angebracht. Auf dieser Welle 33 sind fluchtend unterhalb des Kettenrades 30 der Hohlwellen 27, 27' Kettenräder 32 befestigt. Die Hohlwellen 27, 27' werden nun über Rollenketten 31 mittels der Kettenräder 30, 32 miteinander verbunden. Auf der Seite der Seitenwand 5 wird die Kette dabei über eine weitere Welle 34 und Kettenrad 35 geführt, wodurch eine Drehrichtungsumkehr bei der Übertragung der Drehung auf die Hohlwelle 27' erfolgt.

Die Drehrichtungsumkehr könnte unter Weglassung der Welle 34 auch dadurch erfolgen, dass die Rollenkette auch hier über die Kettenräder 32 geführt würde, die Gewindespindel 25 in der Hohlwelle 27 mit Rechtsgewinde und die Gewindespindel 25 in der Hohlwelle 27' mit Linksgewinde versehen würde.

### Bezugszeichenliste

- 1: Fördervorrichtung
- 2: Förderelement
- 3: Förderelement
- 4: Außenwand
- 5: Außenwand
- 6: Mittelhalterung
- 7: Kammer
- 8: Vorderwand
- 9: Rückwand
- 10: Seitenwand
- 11: Seitenwand
- 12: Bodenplatte
- 13: Saugvorrichtung
- 14: Öffnung
- 15: Absaugkanal
- 16: luftdurchlässige Fläche
- 17: Handrad
- 18: Handrad
- 19: Scharnier
- 20: Drehpunkt
- 21: Befestigungsvorrichtung
- 22: Schraubverbindung
- 23: Langloch
- 24: Zapfen
- 25: Gewindespindel
- 26: Mutter
- 27, 27': Hohlwelle
- 28: Halterung
- 29: Befestigungsvorrichtung
- 30: Kettenrad
- 31: Rollenkette
- 32: Kettenrad
- 33: Welle
- 34: Welle
- 35: Kettenrad

## Patentansprüche

1. Fördervorrichtung (1) für flache Artikel mit Förderelementen (2, 3), einer Kammer mit Mitteln zum Erzeugen von Unterdruck in dieser Kammer, wobei die Kammer gegenüber den Förderelementen (2, 3) derart angeordnet ist, dass die Summe der Förderelemente eine für die Luft der Kammer durchlässige obere Fläche bilden,
**dadurch gekennzeichnet,**
**dass** die Kammer bewegliche Seitenwände (10, 11) hat, mittels derer der Querschnitt der Kammer veränderbar ist.

2. Fördervorrichtung (1) nach Anspruch 1,
**dadurch gekennzeichnet,**
**dass** die Seitenwände (10, 11) quer zur Transportrichtung der flachen Artikel verschiebbar sind.

3. Fördervorrichtung (1) nach Anspruch 1,
**dadurch gekennzeichnet,**
**dass** die Seitenwände (10, 11) als Klappen ausgebildet sind, die über jeweils einen Drehpunkt (20) verstellbar sind.

4. Fördervorrichtung (1) nach einem der Ansprüche 1 bis 3,
**dadurch gekennzeichnet,**
**dass** die Kammer einen rechteckigen Querschnitt hat.

5. Fördervorrichtung (1) nach Anspruch 1 oder 3,
**dadurch gekennzeichnet,**
**dass** die Kammer einen trapezförmigen Querschnitt hat.

6. Fördervorrichtung (1) nach einem der vorhergehenden Ansprüche,
**dadurch gekennzeichnet,**
**dass** die Seitenwände (10, 11) gleichzeitig verstellbar sind.

7. Fördervorrichtung (1) nach einem der vorhergehenden Ansprüche,
**dadurch gekennzeichnet,**
**dass** die Seitenwände (10, 11) unabhängig voneinander getrennt verstellbar sind.

8. Fördervorrichtung (1) nach einem der vorhergehenden Ansprüche,
**dadurch gekennzeichnet,**
**dass** die Mittel zur Schaffung des Unterdrucks in der Kammer mindestens einen Ventilator umfassen.

9. Fördervorrichtung (1) nach einem der vorhergehenden Ansprüche,
**dadurch gekennzeichnet,**
**dass** die Fördervorrichtung (1) Mittel zum Ändern der Orientierung der flachen Artikel aufweist.

10. Fördervorrichtung (1) nach Anspruch 9,
**dadurch gekennzeichnet,**
**dass** die Mittel zum Ändern der Orientierung der flachen Artikel mindestens zwei nebeneinander, entlang der Bahn der Artikel angeordnete, Förderelemente (2, 3) aufweisen, die mit unterschiedlichen Geschwindigkeiten antreibbar sind.

11. Fördervorrichtung (1) nach Anspruch 10,
**dadurch gekennzeichnet,**
**dass** die Förderelemente (2, 3) Transportrollen sind.

12. Fördervorrichtung (1) nach Anspruch 11,
**dadurch gekennzeichnet,**
**dass** die Transportrollen mit einer die Reibung erhöhenden Schicht versehen sind.

## Claims

1. Conveying device (1) for flat articles with conveying elements (2, 3), a chamber with means for generating a negative pressure in the chamber, which is arranged relative to the conveying elements (2, 3) in such a way that the conveying elements together form an upper surface through which the air of the chamber can pass,
**characterized in**
**that** the chamber includes movable side walls (10, 11) by means of which the cross section of the chamber is changeable.

2. Conveying device (1) according to claim 1,
**characterized in**
**that** the side walls (10, 11) are displaceable in a direction that is perpendicular to the conveying direction of the flat articles.

3. Conveying device (1) according to claim 1,
**characterized in**
**that** the side walls (10, 11) are formed as flaps that are adjustable via a respective pivot (20).

4. Conveying device (1) according to one of claims 1 to 3,
**characterized in**
**that** the chamber has a rectangular cross section.

5. Conveying device (1) according to claim 1 or 3,
**characterized in**
**that** the chamber has a trapezoidal cross section.

6. Conveying device (1) according to one of the preceding claims,
**characterized in**
**that** the side walls (10, 11) are adjustable simultaneously.

7. Conveying device (1) according to one of the preceding claims,
**characterized in**
**that** the side walls (10, 11) are adjustable separately and independently of each other.

8. Conveying device (1) according to one of the preceding claims,
**characterized in**
**that** the means for creating the negative pressure in the chamber comprise at least one fan.

9. Conveying device (1) according to one of the preceding claims,
**characterized in**
**that** the conveying device (1) includes means for changing the orientation of the flat articles.

10. Conveying device (1) according to claim 9,
**characterized in**
**that** the means for changing the orientation of the flat articles include at least two conveying elements (2, 3) that are arranged side by side along the path of the articles and are drivable at different speeds.

11. Conveying device (1) according to claim 10,
**characterized in**
**that** the conveying elements (2, 3) are transport rollers.

12. Conveying device (1) according to claim 11,
**characterized in**
**that** the transport rollers are provided with a layer that increases friction.

## Revendications

1. Dispositif de transport (1) pour articles plats, comprenant des éléments de transport (2, 3), une chambre avec des moyens pour produire une dépression dans cette chambre, la chambre étant agencée par rapport aux éléments de transport (2, 3) de façon à ce que la somme des éléments de transport forme une surface supérieure perméable à l'air de la chambre, **caractérisé en ce que** la chambre possède des parois latérales (10, 11) mobiles, au moyen desquelles il est possible de faire varier la section transversale de la chambre.

2. Dispositif de transport (1) selon la revendication 1, **caractérisé en ce que** les parois latérales (10, 11) sont mobiles dans une direction transversale à la direction de transport des articles plats.

3. Dispositif de transport (1) selon la revendication 1, **caractérisé en ce que** les parois latérales (10, 11) sont formées de volets qui sont réglables chacun par rapport à un point de rotation (20).

4. Dispositif de transport (1) selon l'une des revendications 1 à 3, **caractérisé en ce que** la chambre présente une section transversale rectangulaire.

5. Dispositif de transport (1) selon la revendication 1 ou 3, **caractérisé en ce que** la chambre présente une section transversale de forme trapézoïdale.

6. Dispositif de transport (1) selon l'une des revendications précédentes, **caractérisé en ce que** les parois latérales (10, 11) sont réglables simultanément.

7. Dispositif de transport (1) selon l'une des revendications précédentes, **caractérisé en ce que** les parois latérales (10, 11) sont réglables séparément, indépendamment l'une de l'autre.

8. Dispositif de transport (1) selon l'une des revendications précédentes, **caractérisé en ce que** les moyens pour produire la dépression dans la chambre comprennent au moins un ventilateur.

9. Dispositif de transport (1) selon l'une des revendications précédentes, **caractérisé en ce que** le dispositif de transport (1) comporte des moyens pour faire varier l'orientation des articles plats.

10. Dispositif de transport (1) selon la revendication 9, **caractérisé en ce que** les moyens pour faire varier l'orientation des articles plats comprennent au moins deux éléments de transport (2, 3) qui sont agencés côte à côte le long de la trajectoire des articles, et peuvent être entraînés avec des vitesses différentes.

11. Dispositif de transport (1) selon la revendication 10, **caractérisé en ce que** les éléments de transport (2, 3) sont des rouleaux de transport.

12. Dispositif de transport (1) selon la revendication 11, **caractérisé en ce que** les rouleaux de transport sont pourvus d'une couche de revêtement augmentant la friction.
